# EUROPÄISCHE PATENTANMELDUNG

(11) **EP 1 570 977 A1**
(43) Veröffentlichungstag der Anmeldung: **07.09.2005**
(21) Anmeldenummer: 04405133.2
(22) Anmeldetag: 05.03.2004
(51) Int. Cl.: B29C 70/50, B29C 70/20

(54) **Verfahren zur kontinuierlichen Herstellung von faserverstärkten Kunststoffplatten**

(71) Anmelder: Alcan Technology & Management Ltd., 8212 Neuhausen am Rheinfall (CH)
(72) Erfinder: Behre, Kurt, 49078 Osnabrück (DE)

(57) **Zusammenfassung**

Die Erfindung betrifft ein Verfahren zur kontinuierlichen Herstellung eines mit flächenförmigen Fasergebilden verstärkten, thermoplastischen Plattenmaterials. Sie zeichnet sich dadurch aus, dass einer Faserlegeeinrichtung ein erstes bahnförmiges Fasergebilde (2) zugeführt wird, und mittels Faserzufuhreinheiten (3a,3b,3c) inline ein oder mehrere weitere bahnförmige Fasergebilde (7a,7b,7c) über das erste Fasergebilde angeordnet werden, wobei mittels einer oder mehreren den Faserzufuhreinheiten vor- oder nachgeschalteten Matrixzufuhreinheiten (5a,5b,5c,5d) auf freiliegende Lagen von Fasergebilden ein Matrixausgangsmaterial, insbesondere ein reaktives Ausgangsmaterial wie zyklische Oligomere des PBT, zugeführt wird, und die aus der Faserlegeeinrichtung austretende, mehrlagige, ein- oder mehrfach mit Zwischenlagen aus Matrixausgangsmaterial beschichtete Mehrschicht-Faserbahn (6) einer Durchlaufpresse (12) zugeführt wird, in welcher das Matrixausgangsmaterial unter Wärme und/oder Druckeinwirkung in eine niedrig-viskose Flüssigkeit überführt wird und die Mehrschicht-Faserbahn unter imprägnierung der Fasergebilde in ein plattenförmiges Kunststoffmaterial aus PBT (Poylbutylenterephthalat) verpresst wird.

## Beschreibung

Die Erfindung betrifft ein Verfahren zur kontinuierlichen Herstellung von faserverstärkten Kunststoffplatten mit thermoplastischer Matrix nach dem Oberbegriff des Anspruchs 1.

Bis anhin gestaltete es sich schwierig thermoplastische Kunststoffmatrixsysteme in einem kontinuierlichen Verfahren zur Herstellung von faserverstärkten Kunststoffplatten zu verarbeiten. Die Schwierigkeit der Verarbeitung von thermoplastischen Kunststoffmatrixsystemen liegt unter anderem in der Bereitstellung eines geeigneten, reaktiven Ausgangsmaterials, welches nicht nur chemische stabil ist sondern sich auch zur weiteren Verarbeitung in einen niedrig-viskosen Zustand überführen lässt. Überdies sind keine geeigneten Verfahren zur kontinuierlichen Herstellung von Plattenmaterial mit einem thermoplastischen Kunststoffmatrixsystem bekannt.

Somit beschränkte sich bis anhin die Herstellung von faserverstärktem Plattenmaterial mit thermoplastischer Kunststoffmatrix auf diskontinuierliche und entsprechend aufwendige Verfahren.

Aufgabe vorliegender Erfindung ist es, ein kontinuierliches Verfahren zur Herstellung von mit Fasergebilden verstärktem Plattenmaterial mit einer thermoplastischen Kunststoffmatrix vorzuschlagen.

Erfindungsgemäss wird die Aufgabe durch den kennzeichnenden Teil der unabhängigen Ansprüche gelöst. Weiterbildende Ausführungen werden durch die abhängigen Ansprüche beschrieben, welche hiermit Teil der Beschreibung sind.

Die Definitionen der nachfolgenden Begriffe sollen im vorliegendem Text Gültigkeit haben:

Reaktives Ausgangsmaterial umfasst definitionsgemäss unter anderem zyklische bzw. makrozyklische Oligomere des Polyesters, insbesondere des PBT (CPBT genannt), welche mit einem Polymerisations-Katalysator vermengt sind. Ferner umfasst das reaktive Ausgangsmaterial auch Blends (Legierungen) enthaltend die vorgenannten Stoffe, welche bsp. nach Abschluss der Polymerisation ein PBT-Blend (PBT-Kunststofflegierung) ergeben. Reaktive Ausgangsmaterialien der genannten Art zur Herstellung von Polyester bzw. PBT-Kunststoffen sind in der US 6,369,157 näher beschrieben, deren Inhalt hiermit Teil der Offenbarung ist. Ein besonders geeignetes reaktives Ausgangsmaterial mit zyklischen Oligomeren wird unter dem Namen CBT™ (Cyclic Butylene Terephthalate) von der Firma Cyclics bzw. Dow Chemical Company vertrieben.

Der Polymerisations-Katalysator kann bsp. ein Zink-Katalysator oder ein anderer geeigneter Katalysator sein. Das definitionsgemässe reaktive Ausgangsmaterial zeichnet sich insbesondere dadurch aus, dass sich dieses zu seiner Verarbeitung in eine niedrigviskose, Fasergebilde gut durchtränkende Schmelze überführen lässt.

Polyester beinhalten definitionsgemäss unter anderem Kunststoffe wie PET (Polyethylenterephthalat) sowie dazugehörige Kunststoff-Legierungen und insbesondere PBT (Polybutylenterephthalat) oder PBT-Blends, auch PBT-Kunststofflegierungen genannt.

Fasergebilde sind definitionsgemäss flächenförmige Gebilde und umfassen unter anderem textile Flächengebilde, z.B. Vliese, "Non-wovens", nicht-maschenbildende Systeme, wie Gewebe, uni- oder bidirektionale Gelege, Geflechte oder Matten usw. oder z.B. maschenbildende Systeme, wie Gestricke oder Gewirke sowie gestickte Strukturen.

Die Fasern der Fasergebilde beinhalten definitionsgemäss Langfasern mit Faserlängen von z.B. 3-150 mm oder Endlosfasern. Sie sind bsp. in Form von Rovings zu Fasergebilden verarbeitet.

Die Fasern können Glasfasern, Aramidfasern, Kohlenstofffasern, Kunststofffasern, Naturfasern oder Gemische davon sein. Kunststofffasern können insbesondere Polyesterfasern, wie z.B. PET, PBT oder PBT-Blend, sein. Hinsichtlich anorganischer Fasern werden bevorzugt Glasfasern verwendet, da sich diese im Gegensatz zu Aramid- oder

Kohlenstofffasern beim Wiederverwerten der faserverstärkten Kunststoffartikel mit relativ wenig Aufwand von der Kunststoffmatrix trennen lassen und Glasfasern ferner verhältnismässig kostengünstig sind.

PBT-Fasern zeichnen sich dadurch aus, dass diese bedingt durch den Herstellungsprozess eine kristalline Ausrichtung in Faserrichtung aufweisen, während die Matrix zwischen den Fasern weitgehend keine kristalline Ausrichtung aufweist, d.h. amorph ist, oder von teilkristalliner Natur ist.

Platte bedeutet definitionsgemäss einen flächigen Körper mit einer gewissen Biegesteifigkeit und einer Dicke, welche im Vergleich zur Längen- und Breitenausdehnung wesentlich kleiner ist. Die mit erfindungsgemässem Verfahren kontinuierlich, d.h. endlos hergestellten Platten weisen bsp. eine Dicke von 1 mm oder grösser, vorzugsweise von 3 mm oder grösser, und insbesondere von 5 mm oder grösser und von 50 mm oder kleiner, vorzugsweise 20 mm oder kleiner, und insbesondere von 10 mm oder kleiner, auf.

Zur Ausführung des Verfahrens wird in einer Faserlegeeinrichtung ein erstes bahnförmiges und vorzugsweise ungefaltetes Fasergebilde in Vorschubrichtung zugeführt. Mittels Faserzufuhreinheiten werden inline ein oder mehrere weitere bahnförmige Fasergebilde über das erste Fasergebilde angeordnet. Vor oder nach wenigstens einer und vorzugsweise mehreren Faserzufuhreinheiten sind Matrixzufuhreinheiten vorgesehen, mittels welchen auf frei liegenden Lagen von Fasergebilden ein Matrixausgangsmaterial zugeführt wird.

Die durch die Faserlegeeinrichtung geführte und fortlaufend mit weiteren Faserlagen und/oder Matrixausgangsmaterial beschichtete Mehrschicht-Faserbahn wird nach Abschluss der Beschichtungen, d.h. nach Austritt aus der Faserlegeeinrichtung, einer Durchlaufpresse zugeführt, in welcher das Matrixausgangsmaterial unter Wärme- und/oder Druckeinwirkung in eine niedrigviskose Flüssigkeit überführt wird und die Mehrschicht-Faserbahn unter Imprägnierung der Fasergebilde in ein plattenförmiges Material verpresst wird.

Die Faserlegeeinrichtung und die Durchlaufpresse sind hierbei inline angeordnet. Inline bedeutet in einer (einzigen) Fertigungslinie angeordnet.

Die Fasergebilde können trocken oder bereits vorimprägniert, insbesondere mit einem Bindemittel vorimprägniert, zugeführt werden. Die Zusammensetzung der Vorimprägnierung entspricht vorzugsweise dem zugeführten Matrixausgangsmaterial.

Das Matrixausgangsmaterial ist vorzugsweise ein reaktives Ausgangsmaterial gemäss Definition. Das reaktive Ausgangsmaterial enthält insbesondere zyklische Oligomere des PBT (CPBT) vermengt mit einem Polymerisationskatalysator oder besteht daraus.

Das Matrixausgangsmaterial wird bsp. in Flüssigform, als Folie oder Film und vorzugsweise in Pulverform auf das oder die Fasergelege appliziert. Wird das Matrixausgangsmaterial in Flüssigform appliziert, so kann dies mittels Sprühen, Streichen, Giessen, Walzen oder Rakeln geschehen. Die Matrixzufuhreinheiten sind entsprechend ausgestattet. Ferner kann das Matrixausgangsmaterial auch durch Imprägnieren der Fasergebilde in einem Durchlauftauchbad aufgebracht werden.

Durch Erwärmen der mit dem Matrixausgangsmaterial beschichteten, insbesondere mit Pulver oder einem Film bzw. Folien beschichteten, Fasergebilde bzw. Fasergelege in der Faserlegevorrichtung, können durch die adhäsiven Eigenschaften des erweichten bzw. angeschmolzenen Ausgangsmaterials die Fasergebilde bzw. deren Fasern miteinander verklebt werden, wobei der Polymerisationsprozess noch nicht zwingend ausgelöst werden muss, jedoch in spezieller Ausführung der Erfindung bereits einsetzen kann.

Die niedrig-viskosen Eigenschaften des verwendeten Matrixausgangsmaterials garantieren eine optimale Durchtränkung bzw. Imprägnierung der Fasern, was insbesondere bei Kunststoffartikeln mit einem hohen Fasergehalt in Form von dichten Fasergebilden von grosser Bedeutung ist. So liegt der Fasergehalt der mit erfindungsgemässem Verfahren hergestellten faserverstärkten Kunststoffplatten vorzugsweise bei mehr als 30 Vol.-% (Volumenprozent), insbesondere bei mehr als 40 Vol.-%, und vorzugsweise bei kleiner 80 Vol.-%, insbesondere bei kleiner 70 Vol.-% und vorteilhaft bei kleiner 60 Vol.-%.

Die Polymerisaton des reaktiven Matrixausgangsmaterial zu einer thermoplastischen Kunststoffmatrix, insbesondere zu einer PBT-Kunststoffmatrix, findet vollständig oder wenigstens zur Hauptsache in der Durchlaufpresse statt.

Gemäss einer ersten spezifischen Ausführungsvariante der Erfindung wird das Matrixausgangsmaterial in Pulverform mittels eines Pulverstreuers auf die Fasergebilde gestreut.

Gemäss einer zweiten spezifischen Ausführungsvariante der Erfindung wird das Matrixausgangsmaterial in Form einer Folie oder eines Films auf die Fasergebilde aufgebracht.

Die Faserlegeeinrichtung enthält vorzugsweise eine oder mehrere inline angeordnete Pressstationen, insbesondere Presseure, mittels welchen die Mehrschicht-Faserbahn inline vorgepresst wird. Die besagten Presseure umfassen eine Andruckrolle und eine Gegendruckrolle, welche paarweise angeordnet sind, und zwischen welchen die Mehrschicht-Faserbahn unter Ausübung eines Pressdruckes durchgeführt wird.

In Weiterbildung der Erfindung ist die Pressstation bzw. der Presseur teil einer Faserzufuhreinheit, wobei die Andruckrolle gleichzeitig als Förderrolle dient über welche ein bahnförmiges Fasergebilde zugeführt bzw. in Vorschubrichtung umgelenkt und auf das Fasergelege appliziert wird. Die Pressstation ist bevorzugt in einer das Fasergebilde ungefaltet in Vorschubrichtung zuführenden Faserzufuhreinheit angeordnet.

In Weiterbildung der Erfindung ist wenigstens eine Faserzufuhreinheit als Kreuzleger ausgebildet, mittels welchem ein zur Vorschubrichtung der Mehrschicht-Faserbahn schräg oder diagonal zugeführtes bahnförmiges Flächengebilde durch regelmässiges Umlegen desselbigen entlang Legekanten ausbildenden Seitenränder der Mehrschicht-Faserbahn mehrlagig, d.h. insbesondere zweilagig unter gleichzeitigem Vorschub auf die Faserbahn abgelegt wird. Das aufgebrachte Fasergebilde wird bevorzugt in einem Winkel von rund 45° zur Vorschubrichtung des Fasergeleges zugeführt und jeweils in einem Winkel von rund 45° zur Vorschubrichtung des Fasergeleges umgelegt. Die Bahnbreite des schräg zugeführten Fasergebildes entspricht hier der Länge der von einer Legekante zur gegenüberliegenden Legekante ausgebildeten schräg über die Faserbahn führenden Kantenlinie. Ferner entspricht die Bahnbreite des schräg zugeführten Fasergebildes dem Produkt: b * √2 (Wurzel aus 2), wobei b der Breite der (Mehrschicht-) Faserbahn entspricht.

Es können jedoch auch andere Zufuhr- und Umlegwinkel sowie andere Bahnbreiten gewählt werden. Die Faserzufuhreinheit mit Kreuzleger soll hierzu das Einstellen eines Zufuhr- und Umlegwinkels erlauben.

Das Fasergebilde wird mittels Umlenkungen im Kreuzleger in einer wechselnden Seitwärtsbewegung, d.h. einer hin und her Bewegung bezogen auf die Vorschubrichtung, überkreuzend aufgebracht. Ferner kann das Fasergebilde mittels Umlenkungen im Kreuzleger in wickelartiger Drehbewegung überkreuzend aufgebracht werden. Die mehrschichtig, überkreuzend aufgebrachten Fasergebilde können fallweise in nachgeordneten Stationen mittels Hilfsmittel wie Fasern, Nadeln oder Fäden gegeneinander bzw. an andere Fasergebilde fixiert werden.

Enthalten die Fasergebilde bsp. gerichtete Fasern, insbesondere in eine oder zwei Richtungen gerichtete Fasern, wie dies bei Geweben üblich ist, so wird durch das abschnittsweise Umlegen der Fasergebilde die Faserrichtung in der Faserbahn kontinuierlich geändert, wodurch die mechanischen Werte in mehrere Richtungen betont werden.

In Weiterbildung der Erfindung wird abwechslungsweise ein bahnförmiges, ungefaltetes Fasergebilde in Vorschubrichtung des Fasergeleges und ein nachfolgendes bahnförmiges Fasergebilde schräg oder diagonal zur Vorschubrichtung des Fasergeleges kreuzweise gefaltet zugeführt wird. Das, eine erste abschliessende Faserdeckschicht der Mehrschicht-Faserbahn ausbildende Fasergebilde sowie das die zweite abschliessende Faserdeckschicht der Mehrschicht-Faserbahn ausbildende Fasergebilde ist vorzugsweise ungefaltet und in Vorschubrichtung der Mehrschicht-Faserbahn zugeführt. Die beiden Fasergebilde werden entsprechend mit der ersten und letzten Faserzufuhreinheit der Faserlegeeinrichtung zugeführt.

Zwecks Zufuhr von Matrixausgangsmaterial ist bevorzugt wenigstens jeweils im Anschluss an eine Faserzufuhreinheit mit Kreuzleger eine Matrixzufuhreinheit, insbesondere ein Pulverstreuer, angeordnet. Es kann jedoch auch jeder Faserzufuhreinheit jeweils eine Matrixzufuhreinheit, insbesondere eine Pulverstreuer, nachgeordnet sein. In bevorzugter Ausführung der Erfindung ist insbesondere zwischen der letzten Faserzufuhreinheit und der Durchlaufpresse eine letzte Matrixzufuhreinheit, insbesondere ein Pulverstreuer, angeordnet.

Die Anzahl der Faserlagen und die Menge des eingebrachten Matrixausgangsmaterials bestimmt die erzielbare Dicke der Mehrschicht-Faserbahn und somit des zu fertigenden Plattenmaterials sowie dessen Fasergehalt. Die einzelnen eingebrachten Fasergebilde können eine voneinander abweichende Struktur aufweisen. So können bsp. wechselnde Lagen von Faservliesen und Fasergeweben vorgesehen sein.

Die Mehrschicht-Faserbahn wird in einer bevorzugten Ausführung der Erfindung nach Zufuhr sämtlicher Fasergebilde sowie sämtlichen Matrixausgangsmaterials und vor Eintritt in die Durchlaufpresse mittels einer Folienzufuhreinrichtung ein- oder beidseitig mit einer Deckschicht in Form einer Kunststofffolie oder eines extrudierten Kunststofffilms beschichtet. Die Deckschicht verbindet sich dabei in der nachgeordneten Durchlaufpresse mit der polymerisierenden Kunststoffmatrix der Mehrschicht-Faserbahn. Die Deckschicht wird folglich integraler Bestandteil des herzustellenden, faserverstärkten Plattenmaterials.

Die Deckschicht ist bevorzugt aus einem polymerisierten, thermoplastischen Kunststoff, vorzugsweise aus einem (polymerisierten) Polyester, wie PET, insbesondere aus einem PBT oder einer PBT-Kunststofflegierung. Die Deckschichten und die Kunststoffmatrix der Mehrschicht-Faserbahn können in polymerisiertem Zustand aus demselben Kunststoff bzw. aus einander nahestehenden Kunststofflegierungen bestehen.

Die auf die Faserbahn aufgebrachte Deckschicht kann auch ein faserverstärktes, bahnförmiges Kunststoffmaterial mit einer äusseren, frei liegenden und faserfreien (polymerisierten) Kunststoffschicht der oben genannten Zusammensetzung sein.

Die genannte Deckschicht weist bsp. eine Dicke von grösser Dicke 50 µm, insbesondere von grösser 100 µm und von kleiner 2000 µm, insbesondere von kleiner 1000 µm auf.

Dank den klebrigen Eigenschaften des reaktiven Ausgangsmaterials bleibt der Kunststoff-Film bevorzugt auf der imprägnierten bzw. beschichteten Mehrschicht-Faserbahn haften.

Der Schmelz- oder Zersetzungspunkt der Deckschichten liegt hierbei höher als die Polymerisationstemperatur des reaktiven Ausgangsmaterials. Somit wird die Deckschicht während des Polymerisationsvorgangs der Kunststoffmatrix nicht beeinträchtigt.

Da der Schmelzpunkt des bereits polymerisierten PBT-Deckschicht (ca. 220°C) höher ist als die Polymerisationstemperatur des eingesetzten reaktiven Ausgangsmaterials (ca. 180-190°C) wird die Deckschicht aus PBT durch die Wärmeeinwirkung beim Polymerisieren der Kunststoffmatrix nicht nachteilig beeinträchtigt.

Die integrale Applikation der genannten Deckschichten hat den Vorteil, dass eine hohe Oberflächengüte des Plattenmaterials erreicht wird, da die Deckschichten keine Fasern enthalten. Ferner wirken die Deckschichten gleichzeitig als Release-Layer (Trennschichten), welche das Verkleben der imprägnierten Mehrschicht-Faserbahn mit den berührenden Vorrichtungsteilen, wie Walzen oder Pressplatten, bzw. deren Verschmutzung verhindert.

In Ausführung der Erfindung können die Deckschichten eingefärbt sein und so dem Plattenmaterial bereits das äussere, farbliche Erscheinungsbild geben. Die Einfärbung kann derart sein, dass die unter den Deckschichten angeordneten faserverstärkten Schichten nicht mehr sichtbar sind. Dadurch kann gegebenenfalls ein nachfolgender Farblackierungsschritt eingespart werden.

Die in Form eines Materialverbundes vorliegende Mehrschicht-Faserbahn wird in der Durchlaufpresse unter Zufuhr von Wärme und/oder Druck unter Polymerisation der Kunststoffmatrix zu einem Polyester, insbesondere zu einem PBT innig, und vorzugsweise porenfrei zu einem plattenförmigen Material geformt.

Die Mehrschicht-Faserbahn wird in der Durchlaufpresse vorzugsweise durch mehrere, separat justierbare Presszonen und Temperierzonen geführt, wobei die Pressdrücke durch schwimmende, hydraulisch betätigte untere Pressplatten, welche gegen eine obere starre Pressenkonstruktion arbeiten, erzeugt werden. Der Druck in der Durchlaufpresse wird insbesondere über segmentierte Pressenplatten mit zueinander einstellbaren Spaltabständen aufgebaut. Durch die Spaltöffnungen zwischen benachbarten Pressensegmenten wird ein Verschwimmen der Faserbahn verhindert.

In bevorzugter Ausführung ist nach einer bestimmten Anzahl segmentierter Pressenplatten jeweils eine zusätzliche Pressstation, insbesondere ein Presseur angeordnet, welcher einen Liniendruck auf das imprägnierte Fasergelege ausübt. Durch das Ausüben eines Liniendruckes werden allfällig vorhandene Lunker und Blasen in der Kunststoffmatrix ausgetrieben. Die Durchlaufpresse kann einen oder mehrere den Pressenplatten nachgeordnete Pressstationen, insbesondere Presseure, aufweisen, so dass das Fasergelege eine vollständige und blasenfreie Durchtränkung der Fasergebilde mit der schmelzflüssigen Kunststoffmatrix erfährt.

Der Vorschub des Fasergeleges bzw. des Plattenmaterial in der Durchlaufpresse geschieht bevorzugt mittels einer Doppelbandanlage.

Das fertige Plattenmaterial kann nach Verlassen der Durchlaufpresse auf einem Rollenförderer einer Schneid- oder Sägevorrichtung zugeführt und längs und/oder quer zur Durchlaufrichtung bzw. Vorschubrichtung zu einzelnen Platten oder Streifen geschnitten bzw. abgelängt und batch-weise gestapelt werden.

Die Vorrichtung zur Ausführung des erfindungsgemässen Verfahrens enthält wie bereits erwähnt eine Faserlegeeinrichtung und eine inline daran anschliessende Durchlaufpresse. Die Faserlegeeinrichtung enthält mehrere Faserzufuhreinheiten zur Inline-Zuführung von bahnförmigen Fasergebilden sowie eine oder mehrere den Faserzufuhreinheiten zwischen- oder nachgeschaltete Matrixzufuhreinheiten zur Zufuhr eines Matrixausgangsmaterial auf frei liegenden Lagen von Fasergebilden.

Die Matrixzufuhreinheit ist bsp. ein Pulverstreuer, mittels welchem das in Pulverform vorliegende Matrixausgangsmaterial jeweils auf eine Lage eines frei liegenden Fasergebildes gestreut wird. Die Matrixzufuhreinheit kann auch eine Folienzufuhreinrichtung sein, mittels welcher ein folienförmiges Matrixausgangsmaterial auf jeweils eine frei liegende Lage eines Fasergebildes aufgebracht wird.

Die Faserlegeeinrichtung enthält bevorzugt eine oder mehrere Pressstationen, insbesondere Presseure, mittels welchen das mehrschichtige, bahnförmige Fasergelege inline vorgepresst werden kann. Die Pressstation enthält bevorzugt eine Andrückrolle und Gegendruckrolle, welche paarweise angeordnet sind, und zwischen welchen das bahnförmige Fasergelege durchgeführt wird. Die Pressstation ist bevorzugt teil einer Faserzufuhreinheit, insbesondere zur Zufuhr des Fasergebildes in Vorschubrichtung, wobei die Andrückrolle gleichzeitig als Förderrolle zur Zufuhr des bahnförmigen Fasergebildes dient.

Wenigstens eine Faserzufuhreinheit der Faserlegeeinrichtung ist als Kreuzleger ausgebildet. In bevorzugter Ausführung der Erfindung weist die Faserlegeeinrichtung abwechslungsweise eine Faserzufuhreinheit zur Zuführung des bahnförmigen Fasergebildes in Vorschubrichtung des Fasergeleges und eine nachfolgende Faserzufuhreinheit mit Kreuzleger auf.

Vorzugsweise wenigstens im Anschluss an eine Faserzufuhreinheit mit Kreuzleger sind Matrixzufuhreinheiten angeordnet. Die Matrixzufuhreinheiten können auch nach jeder Faserzufuhreinheit angeordnet sein.

Die Durchlaufpresse enthält bevorzugt mehrere, separat justierbare Presszonen und Temperierzonen, wobei die Presszonen zur Ausübung des Pressdruckes schwimmende, hydraulisch betätigte untere Pressplatten, welche gegen eine obere starre Pressenkonstruktion arbeiten, enthalten. Die Presszonen weisen insbesondere eine Mehrzahl von segmentierten Pressenplatten mit zueinander einstellbaren Spaltabständen auf. Die Spaltöffnungen bilden bsp. einen Luftspalt von 1 bis 10 mm, insbesondere von 3 bis 5 mm aus.

In Weiterführung der Erfindung ist nach einer bestimmten Anzahl segmentierter Pressenplatten jeweils eine Pressstation, bevorzugt Ausführung eines Presseurs, zur Erzeugung eines Liniendrucks angeordnet. Die Durchlaufpresse kann einen oder mehrere solcher Pressstationen enthalten.

Die Durchlaufpresse wird bevorzugt mittels einer Doppelbandanlage betrieben. Die dazugehörigen Bänder können bsp. PTFE-(Polytetrafluorethylen)-Bänder oder Stahlbänder sein. Diese Konstruktion erlaubt in Abhängigkeit von der Länge der Heizstrecke mittlere bis hohe Durchsätze.

Das erfindungsgemässe Verfahren erlaubt die kontinuierliche Herstellung von faserverstärktem endlos-Plattenmaterial mit thermoplastischer Kunststoffmatrix, welches einen vollautomatisierten Herstellungsbetrieb von der Zufuhr der Fasergebilde und des Matrixausgangsmaterials bis zum Ablängen des fertigen Plattenmaterials nach Austritt aus der Durchlaufpressen ermöglicht.

Das erfindungsgemässe faserverstärkte Plattenmaterial findet Verwendung als flache Platten bzw. Streifenware. Ferner kann das Plattenmaterial zu thermisch umgeformten, dreidimensionalen Artikeln, bsp. mittels thermischen Tiefziehen, weiterverarbeitet werden. Weiters kann das besagte Plattenmaterial in Form flacher Platten zu mehrschichtigen, d.h. weitere Schichten enthaltende Verbunde, insbesondere zu Sandwichverbunde, weiterverarbeitet werden, wobei die weiteren Schichten bsp. Schaumstoffe, Metallfolien oder Metallplatten umfassen können.

Das besagte Plattenmaterial oder die daraus hergestellten Verbundplatten oder thermogeformten Artikel finden Verwendung im Transportwesen, wie Strassenfahrzeugbau (Automobile, Busse, Lastkraftwagen, Leichtfahrzeugen etc.), Schienenfahrzeugbau (Eisenbahn, Tram, Schnellbahn, Magnetschwebebahnen), Luftfahrt (Flugzeugbau, Raumfahrt), Schiff- und Bootsbau oder Seilbahnen. Ferner findet das besagte Plattenmaterial Verwendung im Hochbau und Tiefbau, Innenausbau und insbesondere in der Gebäudetechnik sowie in der Herstellung von Sportgeräten.

Aus dem erfindungsgemässen Plattenmaterial können bsp. Karosserieverkleidungen, Unterbodenwannen, Strukturprofile, Leisten etc. Verkleidungselemente, Blenden etc., hergestellt werden.

Im folgenden wird die Erfindung beispielhaft und mit Bezug auf die beiliegenden Zeichnungen näher erläutert. Es zeigen:
- Fig. 1a,b:: eine Vorrichtung zur Ausführung des erfindungsgemässen Verfahrens;
- Fig. 2:: beispielhafte Anordnung der Fasergebilde nach erfindungsgemässem Verfahren;
- Fig. 3:: beispielhafte Anordnung des Pulverstreuers innerhalb der Vorrichtung;
- Fig. 4:: einen Querschnitt durch A - A gemäss Fig. 3 mit beispielhafter Anordnung der Fasergebilde.

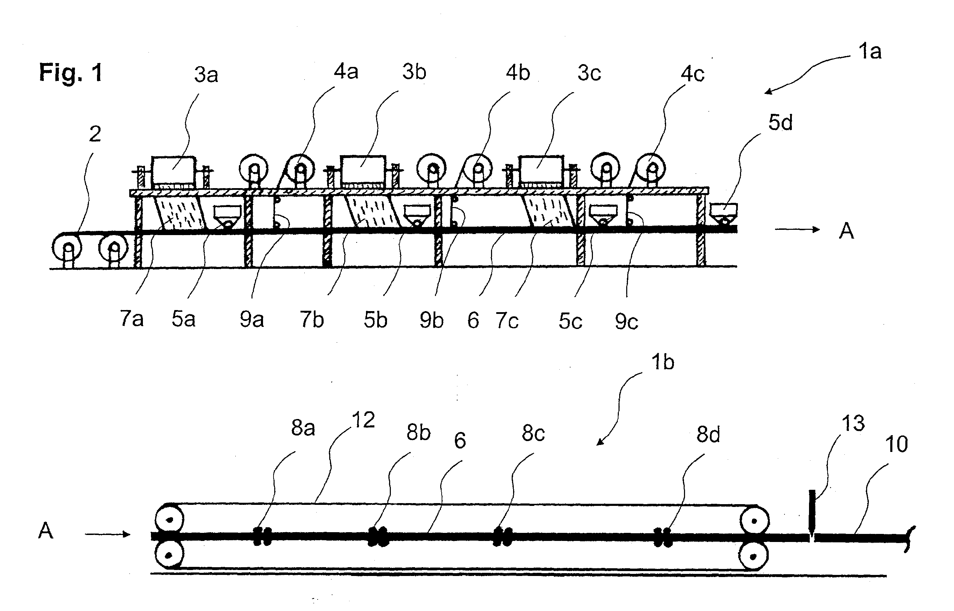

Fig. 1 zeigt eine Vorrichtung 1 a, 1b zur kontinuierlichen Herstellung eines faserverstärkten Plattenmaterials. Ein erstes bahnförmiges Fasergebilde 2 wird in Vorschubrichtung ungefaltet der Vorrichtung 1 a zugeführt. Über das Fasergebilde 2 wird mittels eines Kreuzlegers 3a ein weiteres Fasergebilde 7a schräg/diagonal kreuzweise von Legekante zu Legekante aufgebracht. Mittels Pulverstreuer 5a wird inline kontinuierlich pulverförmiges Matrixausgangsmaterial gleichmässig auf die frei liegende Oberfläche der Faserbahn 6 aufgebracht. Über die mit dem Matrixausgangsmaterial beschichtete Faserbahn 6 wird über eine Faserzufuhreinheit 4a in Vorschubrichtung ein weiteres bahnförmiges Fasergebilde 9a ungefaltet zugeführt und über das kreuzweise angeordnete Fasergebilde 7a gelegt. Das bahnförmige Fasergebilde 9a wird über einen Presseur auf die Mehrschicht-Faserbahn 6 gepresst und verbindet sich mit dem darunterliegenden pulverbeschichteten Fasergebilde 7a. Über einen weiteren Kreuzleger 3b wird ein weiteres bahnförmiges Fasergebilde 7b schräg/diagonal kreuzweise von Legekante zu Legekante auf die Mehrschicht-Faserbahn 6 aufgebracht und mittels Pulverstreuer 5b wiederum mit pulverförmigem Matrixausgangsmaterial beschichtet. Über das mit dem Matrixausgangsmaterial beschichtete Fasergebilde 7b wird über eine Faserzufuhreinheit 4b in Vorschubrichtung ein weiteres bahnförmiges Fasergebilde 9b ungefaltet zugeführt und über das kreuzweise angeordnete Fasergebilde 7b gelegt. Das bahnförmige Fasergebilde 9b wird wiederum über einen Presseur auf die Mehrschicht-Faserbahn 6 gepresst und verbindet sich mit dem darunterliegenden pulverbeschichteten Fasergebilde 7b.

Über einen weiteren Kreuzleger 3c wird erneut ein bahnförmiges Fasergebilde 7c schräg/diagonal kreuzweise von Legekante zu Legekante auf die Mehrschicht-Faserbahn 6 aufgebracht und mittels Pulverstreuer 5c wiederum mit pulverförmigem Matrixausgangsmaterial beschichtet. Über das mit dem Matrixausgangsmaterial beschichtete Fasergebilde 7c wird über eine Faserzufuhreinheit 4c in Vorschubrichtung ein abschliessendes, bahnförmiges Fasergebilde 9c ungefaltet zugeführt und über das kreuzweise angeordnete Fasergebilde 7c gelegt. Das bahnförmige Fasergebilde 9c wird auch hier über einen Presseur auf das Fasergelege 6 gepresst und verbindet sich mit dem darunterliegenden pulverbeschichteten Fasergebilde 7c. Vor Eintritt in die Durchlaufpresse ist ein letzter Pulverstreuer 5d vorgesehen, welcher die freie Oberfläche der Mehrschicht-Faserbahn 6 mit pulverförmigem Matrixausgangsmaterial beschichtet.

Das mit Matrixausgangsmaterial beschichtete Fasergelege 6 wird inline (siehe Fortsetzungspfeil A) einer Durchlaufpresse 1b zugeführt, in welcher die kontinuierlich zugeführte Mehrschicht-Faserbahn in mehreren Presszonen mit segmentierten Pressenplatten zu einem Plattenmaterial verpresst wird. Zwischen den Pressenplatten sind jeweils Presseure 8a,b, c zur Erzeugung eines Liniendrucks angeordnet.

Der Vorschub des Fasergeleges in der Druchlaufpresse wird hierbei von einer Doppelbandfördereinheit 12 gewährleistet. Bei Austritt des Plattenmaterials aus der Durchlaufpresse wird dieses mittels Schneid- oder Sägevorrichtung 13 in einzelne Platten 10 abgelängt.

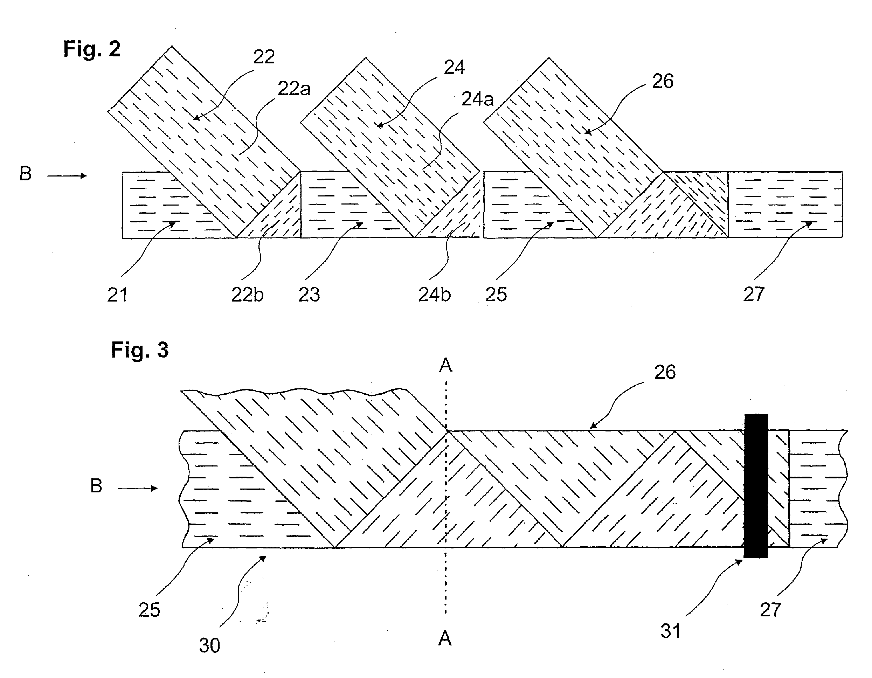

Figur 2 zeigt einen möglichen Aufbau eines mittels erfindungsgemässem Verfahren hergestellten Plattenmaterials. Pfeil B zeigt die Vorschubrichtung der Mehrschicht-Faserbahn in der Vorrichtung auf.

Das Fasergelege enthält ein erstes Fasergebilde 21, welches als erstes ungefaltet in Vorschubrichtung der Vorrichtung zugeführt wurde. Das zweite Fasergebilde 22 ist mittels Kreuzleger in einem 45° Winkel zur Vorschubrichtung schräg/diagonal gekreuzt auf das erste Fasergebilde 21 gelegt worden und bildet jeweils eine obere Faserschicht 22b und eine darunterliegende Faserschicht 22a aus. über dem gefaltet aufgebrachten Fasergelege 22 liegt wiederum ein ungefaltetes in Vorschubrichtung zugeführtes, ungefaltetes Fasergebilde 23.

Die nächste Lage ist wiederum ein mittels Kreuzleger in einem 45° Winkel zur Vorschubrichtung schräg/diagonal gekreuzt aufgebrachtes Fasergebilde 24 mit einer oberen Faserschicht 24b und einer darunter liegenden Faserschicht 24a. Über diese Faserlagen sind analog zum vorgenannten Lagenmuster Fasergebilde 25 und 26 sowie eine abschliessende ebenfalls in Vorschubrichtung zugeführte, ungefaltete Faserlage 27 aufgebracht.

Fig. 3 zeigt einen Ausschnitt aus einer Mehrschicht-Faserbahn 30 mit einem unteren und oberen ungefalteten Fasergebilde 25, 27 sowie einem zwischen diesen beiden Fasergebilden angeordneten, mittels Kreuzleger aufgebrachten Fasergebilde 26. Ein Pulverstreuer 31 ist über dem kreuzweise aufgebrachten Fasergebilde 26 aufgebracht und beschichtet dieses mit pulverförmigem Matrixausgangsmaterial. Daran anschliessend ist die nächste ungefaltete Faserlage 27 aufgetragen.

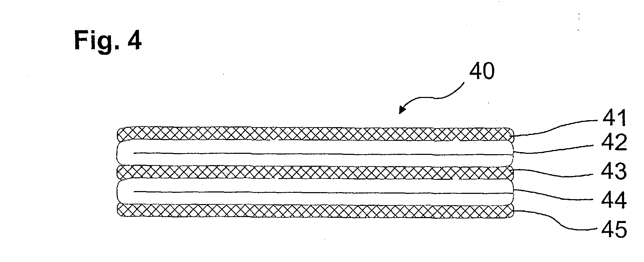

Fig. 4 zeigt einen schematischen Querschnitt A - A durch ein Fasergelege gemäss Fig. 3 mit wechselseitiger Schichtung von kreuzweise, entsprechend zweischichtig applizierten Fasergebilden 42, 44 sowie dazwischen liegenden ungefalteten, in Vorschubrichtung aufgebrachten Fasergebilden 41, 43, 45.

## Patentansprüche

1. Verfahren zur kontinuierlichen Herstellung eines mit flächenförmigen Fasergebilden verstärkten, thermoplastischen Plattenmaterials,
**dadurch gekennzeichnet, dass** einer Faserlegeeinrichtung ein erstes bahnförmiges Fasergebilde zugeführt wird, und mittels Faserzufuhreinheiten inline ein oder mehrere weitere bahnförmige Fasergebilde über das erste Fasergebilde angeordnet werden, wobei mittels einer oder mehreren den Faserzufuhreinheiten vor- oder nachgeschalteten Matrixzufuhreinheiten auf freiliegende Lagen von Fasergebilden ein Matrixausgangsmaterial zugeführt wird, und die aus der Faserlegeeinrichtung austretende, mehrlagige, ein- oder mehrfach mit Zwischenlagen aus Matrixausgangsmaterial beschichtete Mehrschicht-Faserbahn einer Durchlaufpresse zugeführt wird, in welcher das Matrixausgangsmaterial unter Wärme und/oder Druckeinwirkung in eine niedrig-viskose Flüssigkeit überführt wird und die Mehrschicht-Faserbahn unter Imprägnierung der Fasergebilde in ein plattenförmiges Kunststoffmaterial verpresst wird.

2. Verfahren nach Anspruch 1, wobei das Matrixausgangsmaterial ein reaktives Ausgangsmaterial enthaltend zyklische oder makrozyklische Oligomere des Polyesters vermengt mit einem Polymerisationskatalysator, und insbesondere ein reaktives Ausgangsmaterial enthaltend zyklische Oligomere des PBT (CPBT) vermengt mit einem Polymerisationskatalysator, ist.

3. Verfahren nach einem der Ansprüche 1 bis 2, wobei die Matrixzufuhreinheiten Pulverstreuer sind, mittels welchem das in Pulverform vorliegende Matrixausgangsmaterial jeweils auf eine Lage eines frei liegenden Fasergebildes gestreut wird.

4. Verfahren nach einem der Ansprüche 1 bis 2, wobei mittels Matrixzufuhreinheit ein folienförmiges Matrixausgangsmaterial auf jeweils eine frei liegende Lage eines Fasergebildes aufgebracht wird.

5. Verfahren nach einem der Ansprüche 1 bis 4, wobei das reaktive Ausgangsmaterial in der Durchlaufpresse zu einer thermoplastischen Kunststoffmatrix, insbesondere zu einer PBT-Kunststoffmatrix polymerisiert wird.

6. Verfahren nach einem der Ansprüche 1 bis 5, wobei die Faserlegeeinrichtung eine oder mehrere Pressstationen, insbesondere Presseure, enthält, mittels welchen die Mehrschicht-Faserbahn inline vorgepresst wird.

7. Verfahren nach einem der Ansprüche 1 bis 6, wobei die Pressstation eine Andruck- und Gegendruckrolle umfasst, welche paarweise angeordnet sind, und zwischen welchen das bahnförmige Fasergelege unter Ausübung eines Pressvorganges durchgeführt wird.

8. Verfahren nach Anspruch 7, wobei die Pressstation teil einer Faserzufuhreinheit ist, wobei über die Andruckrolle gleichzeitig ein bahnförmiges Fasergebilde zugeführt, umgelenkt und auf die Faserbahn appliziert wird.

9. Verfahren nach einem der Ansprüche 1 bis 8, wobei wenigstens eine Faserzufuhreinheit als Kreuzleger ausgebildet ist, mittels welchem ein in Vorschubrichtung der Faserbahn schräg oder diagonal zugeführtes bahnförmiges Flächengebilde durch regelmässiges Umlegen desselbigen entlang der Seitenränder der Faserbahn auf die Faserbahn appliziert wird.

10. Verfahren nach Anspruch 9, wobei das bahnförmige Flächengebilde in einem Winkel 45° zur Vorschubrichtung der Faserbahn zugeführt und umgelegt wird.

11. Verfahren nach einem der Ansprüche 9 bis 10, wobei abwechslungsweise ein bahnförmiges Fasergebilde ungefaltet in Vorschubrichtung der Faserbahn und ein nachfolgendes bahnförmiges Fasergebilde mittels Kreuzleger schräg oder diagonal zur Vorschubrichtung der Faserbahn überkreuzend zugeführt wird, wobei das erste und letzte zugeführte Fasergebilde vorzugsweise ungefaltet in Vorschubrichtung der Faserbahn zugeführt werden.

12. Verfahren nach einem der Ansprüche 9 bis 11, wobei die Pulverstreueinheiten jeweils im Anschluss an eine Faserzufuhreinheit mit Kreuzleger angeordnet sind.

13. Verfahren nach einem der Ansprüche 1 bis 12, wobei die in Vorschubrichtung des Fasergeleges über eine Faserzufuhreinheit zugeführten weiteren Fasergebilde über eine Pressstation, insbesondere über eine Andrückrolle auf die Mehrschicht-Faserbahn appliziert werden.

14. Verfahren nach einem der Ansprüche 1 bis 13, wobei die Mehrschicht-Faserbahn nach Zufuhr sämtlicher Fasergebilde und sämtlichem Matrixausgangsmaterials und vor Eintritt in die Durchlaufpresse ein- oder beidseitig mit einer Deckschicht in Form einer Kunststoff-Folie oder einem extrudierten Kunststoff-Film beschichtet wird, wobei sich die Deckschicht in der Durchlaufpresse mit der Kunststoffmatrix der Mehrschicht-Faserbahn verbindet.

15. Verfahren nach einem der Ansprüche 1 bis 14, wobei die Deckschicht aus einem thermoplastischen Kunststoff, vorzugsweise aus einem Polyester, wie PET, insbesondere aus einem PBT oder einer PBT-Kunststofflegierung ist.

16. Verfahren nach einem der Ansprüche 1 bis 15, wobei die in Form eines Materialverbundes vorliegende Mehrschicht-Faserbahn in der Durchlaufpresse unter Zufuhr von Wärme und/oder Druck und unter Polymerisation der Kunststoffmatrix zu einem thermoplastischen Kunststoff innig und porenfrei zu einem plattenförmigen Kunststoffmaterial verbunden wird.

17. Verfahren nach einem der Ansprüche 1 bis 16, wobei die Mehrschicht-Faserbahn durch eine Durchlaufpresse mit mehreren, separat justierbaren Presszonen und Temperierzonen geführt wird, und die Pressdrücke durch schwimmende, hydraulisch betätigte untere Pressplatten, welche gegen eine obere starre Pressenkonstruktion arbeiten, erzeugt werden.

18. Verfahren nach einem der Ansprüche 1 bis 17, wobei der Druck in der Durchlaufpresse durch segmentierte Pressenplatten mit zueinander einstellbaren Spaltabständen aufgebaut wird.

19. Verfahren nach einem der Ansprüche 1 bis 18, wobei nach einer bestimmten Anzahl segmentierter Pressenplatten jeweils mittels eines Presseurs ein Liniendruck zum Austreiben von Lunkern und Blasen aus der Kunststoffmatrix erzeugt wird.

20. Verfahren nach einem der Ansprüche 1 bis 19, wobei die Mehrschicht-Faserbahn durch einen oder mehrere in der Durchlaufpresse angeordneten Presseure geführt wird, wodurch die Mehrschicht-Faserbahn eine vollständige, blasenfreie Durchtränkung der Fasergebilde mit der schmelzflüssigen Kunststoffmatrix erfährt.

21. Vorrichtung zur Ausführung des Verfahrens nach Anspruch 1,
**dadurch gekennzeichnet, dass** die Vorrichtung eine Faserlegeeinrichtung und eine inline daran anschliessende Durchlaufpresse enthält, und die Faserlegeeinrichtung mehrere Faserzufuhreinheiten zur Inline-Zuführung von bahnförmigen Fasergebilden sowie eine oder mehrere den Faserzufuhreinheiten zwischen- oder nachgeschaltete Matrixzufuhreinheiten zur Zufuhr eines Matrixausgangsmaterial auf frei liegende Lagen der Fasergebilde, enthält.

22. Vorrichtung nach Anspruch 21, wobei die Matrixzufuhreinheit ein Pulverstreuer ist, mittels welchem ein in Pulverform vorliegendes Matrixausgangsmaterial auf frei liegende Lagen der Fasergebilde gestreut wird.

23. Vorrichtung nach einem der Ansprüche 21 bis 22, wobei die Matrixzufuhreinheit eine Folienzufuhreinheit ist, mittels welcher ein folienförmiges Matrixausgangsmaterial auf jeweils frei liegende Lagen der Fasergebilde aufgebracht wird.

24. Vorrichtung nach einem der Ansprüche 21 bis 23, wobei die Faserlegeeinrichtung eine oder mehrere Pressstationen, insbesondere Presseure, enthält mittels welchen die Mehrschicht-Faserbahn inline vorgepresst wird.

25. Vorrichtung nach einem der Ansprüche 21 bis 24, wobei die Pressstation eine Andruck- und Gegendruckrolle umfasst, welche paarweise angeordnet sind, und zwischen welchen die Mehrschicht-Faserbahn unter Ausübung eines Pressdruckes durchgeführt wird.

26. Vorrichtung nach einem der Ansprüche 21 bis 25, wobei die Pressstation teil einer Faserzufuhreinheit ist, und die Andruckrolle gleichzeitig der ungefalteten Zufuhr und Umlenkung eines bahnförmigen Fasergebildes in Vorschubrichtung dient.

27. Vorrichtung nach einem der Ansprüche 21 bis 26, wobei wenigstens eine Faserzufuhreinheit als Kreuzleger ausgebildet ist, mittels welchem ein in Vorschubrichtung der Mehrschicht-Faserbahn schräg oder diagonal zuführ- und unter Ausbildung von Legekanten umlegbar ist.

28. Vorrichtung nach einem der Ansprüche 21 bis 27, wobei abwechslungsweise eine Faserzufuhreinheit zur ungefalteten Zuführung eines bahnförmigen Fasergebildes in Vorschubrichtung der Faserbahn und eine nachfolgende Faserzufuhreinheit mit Kreuzleger zur Zuführung eines bahnförmigen Fasergebildes schräg oder diagonal zur Vorschubrichtung der Faserbahn, wobei die erste und letzte Faserzufuhreinheit zur ungefalteten Zuführung eines bahnfömrigen Fasergebildes in Vorschubrichtung der Faserbahn ist.

29. Vorrichtung nach einem der Ansprüche 21 bis 28, wobei im Anschluss an eine Faserzufuhreinheit mit Kreuzleger jeweils eine Matrixzufuhreinheit angeordnet ist.

30. Vorrichtung nach einem der Ansprüche 21 bis 29, wobei die Durchlaufpresse mehrere, separat justierbare Presszonen und Temperierzonen enthält, und die Presszonen zur Ausübung des Pressdruckes schwimmende, hydraulisch betätigte untere Pressplatten, welche gegen eine obere starre Pressenkonstruktion arbeiten, enthalten.

31. Vorrichtung nach einem der Ansprüche 21 bis 30, wobei die Presszonen segmentierte Pressenplatten mit zueinander einstellbaren Spaltabständen aufweisen.

32. Vorrichtung nach einem der Ansprüche 21 bis 31, wobei nach einer bestimmten Anzahl segmentierter Pressenplatten jeweils eine Pressstation, insbesondere ein Presseur, zur Erzeugung eines Liniendrucks angeordnet ist.
